# EUROPEAN PATENT APPLICATION

(11) **EP 1 526 008 A1**
(43) Date of publication of application: **27.04.2005**
(21) Application number: 04077878.9
(22) Date of filing: 20.10.2004
(51) Int. Cl.: B60C 27/06, B60C 27/00

(54) **Snow chain, part therefor and method for fitting such a snow chain**

(30) Priority: 20.10.2003 NL 1024570
(71) Applicant: Puzo B.V., 5061 JW Oisterwijk (NL)
(72) Inventor: Puts, Casper Jozephus Petrus, 5062 JV Oisterwijk (NL)
(74) Representative: Valkonet, Rutger

(57) **Abstract**

The invention relates to a snow chain for a tyre mounted on a wheel of a vehicle, which snow chain at least comprises an assembly of chains (5) to be fitted and tensioned round the tyre and the wheel, wherein a disc-shaped element (10) having a diameter at least equal to the diameter of the wheel can be fitted between the wheel and the assembly of chains.

The object of the invention is to provide an improved snow chain as referred to in the introduction, which is characterized in that the disc-shaped element is made of an elastic plastic.

In the first place this makes it possible to mount the wheel protector after the snow chain has been fitted, which significantly increases the ease of use. In addition, a better abutment with the wheel to be protected is obtained in comparison with the prior art. Since the wheel protector does not have a function of itself in the tensioning of the chain assembly of the snow chain, it is not subjected to forces and tensions that reduce its life span.

The invention also relates to a method for fitting a snow chain as disclosed in the present patent application.

## Description

The invention relates to a snow chain for a tyre mounted on a wheel of a vehicle, which snow chain at least comprises an assembly of chains to be fitted and tensioned round the tyre and the wheel, wherein a disc-shaped element having a diameter at least equal to the diameter of the wheel can be fitted between the wheel and the assembly of chains.

Snow chains are generally known, they are in particular used on vehicles in snow (winter sports) areas. The chain assembly is fitted round the tyre and the wheel and subsequently tensioned. As a result, the chain assembly tightly fits round the tyre, so as to give the tyre increased traction on the road surface when driving in wintry conditions.

A drawback of the snow chains that are currently known is the fact that the chain assembly also abuts tightly against the wheel. While driving, and in particular during steering manoeuvres, the chain assembly is subjected to sliding forces, so that the chains of the snow chain move on the tyre and the wheel. In the first place this leads to a reduced tyre life, so that it is not sensible to drive very long (or at very high speeds) with snow chains fitted. In addition, however, the wheel is damaged during use of the snow chains, which mars its appearance, in particular in the case of light alloy wheels.

The use of a snow chain may furthermore lead to damage being caused to the corrosion-resistant coating of the metal wheel, resulting in corrosion of the wheel, especially if salt is used.

From DE-4225802 and also from US 6,446,690 there is known a wheel protector that can be fitted between the snow chain and the wheel. As a result, the aforesaid drawbacks are in any case overcome, because the wheel cannot be damaged by the chain.

The wheel protectors disclosed in the aforesaid patent publications have a number of additional drawbacks. In the first place, the known wheel protectors are configured as a ring, so that the part of the wheel directly surrounding the axis remains exposed to the outside environment, and consequently to the snow chain when the chain is fitted and tensioned over the wheel.

Furthermore, the ring-shaped wheel protector is provided with connecting means at the outer edge, behind which the assembly of chains can be passed. Upon tensioning of the chain assembly, tensioning forces are exerted on said connecting means and thus on the ring-shaped wheel protector, which forces reduce the life span thereof. Also when the motor vehicle is driving, the wheel protector will be subjected, via the connecting means, to forces that reduce the life span thereof. Tensioning the snow chain via the wheel protector may lead to the wheel protector moving ("creeping") while the motor vehicle is driving, as a result of which the wheel to be protected may be damaged by the snow chain yet.

As a result of the specific tensioning construction of the snow chain according to DE-4225802 and US 6,446,690, specific strength requirements are made of the ring-shaped wheel protector, which is to that end made of a hard plastic. This material reduces the life of the wheel protector additionally. The known wheel protector is used in cold conditions, and hard plastic typically becomes brittle at low temperatures (in particular at temperatures below 0□C) and will consequently fracture upon being exposed to excessive forces or tensions.

The object of the invention is to obviate the above drawbacks, and in order to accomplish that object the snow chain as referred to in the introduction is characterized in that the disc-shaped element is made of an elastic plastic. In the first place this makes it possible to mount the wheel protector after the snow chain has been fitted, which significantly increases the ease of use. In addition, a better abutment with the wheel to be protected is obtained in comparison with the prior art.

Since the wheel protector does not have a function of itself in the tensioning of the chain assembly of the snow chain, it is not subjected to forces and tensions that reduce its life span. Because of its elastic nature, the disc-shaped element according to the invention is completely and clampingly retained between the snow chain and the wheel, as a result of which on the one hand a proper abutment with the wheel to be protected is obtained, whilst on the other hand the element is prevented from undesirably moving ("creeping") or becoming detached.

Experiments have shown in that the disc-shaped element is preferably made of a rubber or a thermoplastic. Especially the latter material makes it possible to give the disc-shaped element a shape corresponding to that of any given wheel by means of different manufacturing techniques, using heat. Furthermore, plastic is light in weight and easy to process, whilst in addition the disc-shaped element will not constitute a danger to the public in the event of the element undesirably becoming detached.

Thus the wheel is protected from being damaged by the assembly of chains. Not only will the vehicle retain its original appearance for a prolonged period of time, but in addition the life of the wheel is extended in this manner. An additional advantage is the fact that the disc-shaped element reduces the extent to which snow, ice and especially salt cake on the wheel, as a result of which the life of the wheel is extended and corrosion is prevented.

In a special embodiment, the disc-shaped element is flat, which on the one hand makes it easy to handle the element, whilst on the other hand a minimum amount of space is required for storage or transport of the element in the vehicle.

In a more functional embodiment, the disc-shaped element is arched. As a result of this arched shape, the element will not abut completely flat against the wheel upon being fitted together with the snow chain, but will be flattened once the chain assembly of the snow chain is tensioned. Said flattening sets up a bias in the disc-shaped element, which prevents the disc-shaped element from moving between the wheel and the chain assembly while driving. More in particular, said bias prevents the disc-shaped element from becoming detached from the wheel and the snow chain, so that a product is obtained which is safe for the public as well.

In one embodiment, the disc-shaped element has a recessed central portion. This embodiment is in particular very suitable for use with wheels having a corresponding shape, so that the disc-shaped element fully abuts against the wheel with the inwardly projecting portion thereof. This guarantees an adequate confinement of the element between the wheel and the snow chain, thus preventing it from being displaced. Furthermore, an improved confinement is obtained with this embodiment also when used in combination with a flat wheel, because the recessed central portion is slightly deformed upon tensioning of the chain assembly.

More specifically, the transition between the recessed central portion and the elevated outer portion includes an angle with the recessed central portion in this embodiment, so that accumulation and caking of snow and ice in the central portion is hardly possible, if at all.

In order to make it easier for a user to fit the disc-shaped element, the element may be provided with at least one opening near its centre.

The invention also relates to a disc-shaped element for use in combination with the snow chain as described in this patent application.

The invention also relates to a method for fitting a snow chain embodied as an assembly of chains on a tyre mounted on the wheel of a motor vehicle, comprising the steps of i) fitting the assembly of chains over the tyre, and ii) tensioning the assembly of chains, which method is further characterized by the step of iii) placing a disc-shaped element according to any one or more of the preceding claims between the wheel and the assembly of chains. As a result, the fitting of the snow chain is considerably simplified if not quickened. Furthermore, the disc-shaped element plays no part in the tensioning of the chain asembly, unlike the prior art, which has a life-prolonging effect.

In particular, the method may be characterized in that step iii) is carried out prior to step ii).

The invention will now be explained in more detail 1 with reference to a drawing, in which:
Fig. 1 shows a snow chain according to the prior art;
Figs. 2a-2b are views of a first embodiment of the disc-shaped element according to the invention;
Figs. 3a-3b are views of a second and a third embodiment, respectively, of a disc-shaped element according to the invention;
Fig. 4 is a view of a snow chain provided with a disc-shaped element according to the invention; and
Figs. 5a-5b are front views of Fig. 4.

In the following description of the figures, like parts will be indicated by the same numerals in the various figures.

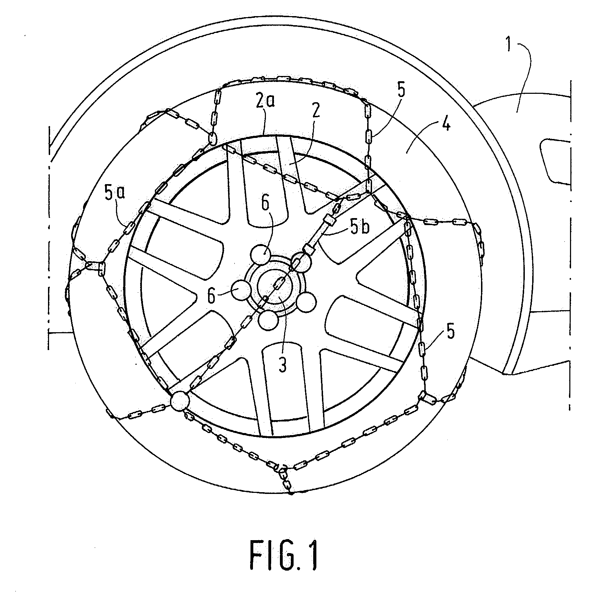

Fig. 1 shows a view of a known snow chain 5 for a tyre 4 fitted on the wheel 2 of a motor vehicle 1. The wheel 2 is mounted on a wheel axle 3 by means of several wheel bolts 6.

The snow chain 5, which is known per se, is built up of an assembly of chains 5-5a, which can be fitted round the tyre 4 and the wheel 2. The chain assembly is provided with a closure 5b for tensioning the snow chain round the tyre 4 and the wheel 2. This results in a chain assembly 5-5a-5b which is fitted tightly round the tyre 4 and the wheel 2, which enhances the traction of the vehicle on the road surface in wintry conditions.

As already explained above, a snow chain 5 which is fitted tightly round the tyre 4 and the wheel 2 causes damage to the wheel 2, since the sliding forces to which the snow chain is subjected while the vehicle 1 is driving cause the various chain segments of the snow chain 5 to move on the tyre 4 and along the wheel 2. In the latter case, abrasive spots will form on the wheel 2, which mar the appearance thereof, in particular in the case of light alloy wheels, and which moreover increase the risk of corrosion as a result of the damage caused to the corrosion resistant coating. Said corrosion in turn shortens the life of the wheel 2.

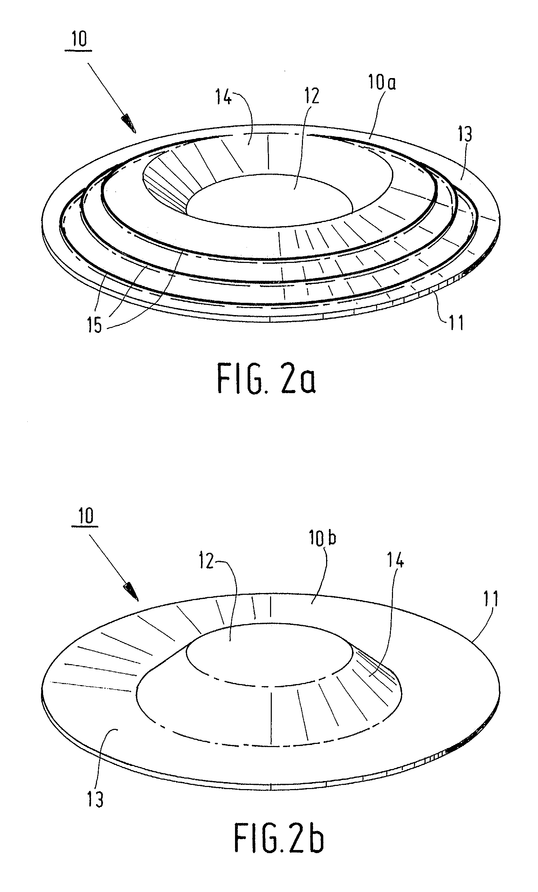

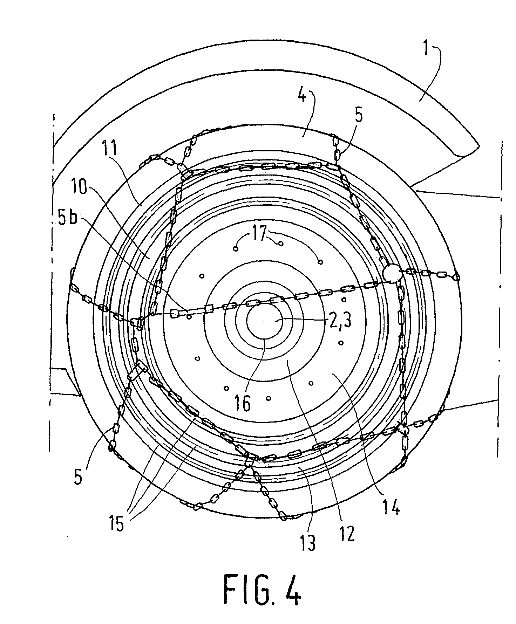

Figs. 2a and 2b are views of part of a snow chain according to the invention that obviates the above drawback. The part 10 that is shown therein is a disc-shaped element, which can be fitted between the wheel 2 and the assembly of chains 5-5a-5b of the snow chain 5. Also refer to Figs. 4 in this connection, in which said part is shown in the position of use thereof.

According to the invention, the disc-shaped element 10 is made of an elastic plastic. In the first place this makes it possible to mount the element 10 after the snow chain 5 has been fitted, providing a considerable ease of use. In addition, a better abutment with the wheel 2 to be protected is obtained in comparison with the prior art. Since the wheel protector 10 does not have a function of its own in the tensioning of the chain assembly of the snow chain 5, it is not subjected to forces and tensions that reduce its life span. Because of its elastic nature, the disc-shaped element 10 according to the invention is completely and clampingly retained between the snow chain 5 and the wheel 2, as a result of which on the one hand a proper abutment with the wheel to be protected is obtained, whilst on the other hand the element is prevented from undesirably moving ("creeping") or becoming detached.

Neither do weather conditions, and in particular low temperatures, affect the disc-shaped element 5, this in contrast to the prior art, which uses a hard plastic disc, which becomes brittle under the influence of low temperatures.

Very suitable plastic materials are (natural) rubber or thermoplastics or elastomers. This has the advantage that a slight deformation of the elastic disc-shaped element 5 caused by the snow chain or by the driving movement of the motor vehicle will not have an adverse effect on the element. The elastic disc-shaped element 10 will invariably return to its original shape.

In particular, various polymers such as polyethylene etc are very suitable. Also polybutadiene, polyisobutylene and polyurethane are suitable. Furthermore, polyvinyl chloride (PVC) or ethylene vinyl acetate (EVA) are very suitable.

Although the disc-shaped element may be flat in its simplest embodiment, the disc-shaped element is preferably arched, as shown in Figs. 2a and 2b. As a result of the arched shape, the disc-shaped element 10 is convex or spherical in shape, which shape in principle functions to ensure that the disc-shaped element 10 will more or less follow the shape of the tyre 4 and the wheel 2 upon being fitted between the wheel 2 and the snow chain 5, so that a proper contact is obtained, in particular between the wheel 2 and the disc-shaped element 10, over the entire surface area of the disc-shaped element 10.

On the other hand, on account of its arched shape the disc-shaped element is pressed against the wheel 2 after being fitted between the wheel 2 and the snow chain 5 as a result of the chain segments being tensioned. This deformation from an arched shape to a flatter shape ensures an improved confinement of the disc-shaped element, thus preventing movement of the disc-shaped element 10 between the wheel 2 and the chain assembly 5-5a-5b. The bias thus set up in the disc-shaped element 10 furthermore prevents the disc-shaped element 10 from undesirably becoming detached from the wheel 2 and the snow chain 5. This latter aspect leads to a product that is safe for the public as well.

Since the diameter of the disc-shaped element 10 is at least equal to but preferably larger than that of the wheel 2, as is clearly shown in Figs. 4, the wheel is fully screened from the chain segments 5-5a-5b. Thus the chain segments cannot grate along the wheel 2 while driving. With this very functional part being provided, damage to the wheel surface is a thing of the past. Not only does this enhance the appearance of the wheel 2, but it also extends the life thereof, because corrosion will no longer occur. The latter aspect is advantageous, especially in winter sports or snow areas, where snow and ice, whether or not mixed with salt, affect the corrosion resistance of the vehicle 1.

In a specific embodiment, which is also shown in Figs. 2a and 2b, the disc-shaped element 10 comprises a recessed central portion 12. This embodiment is very suitable for use with wheels that have a corresponding shape, so that the disc-shaped element 10, on account of its inwardly extending shape, will fully abut against the wheel 2 upon being fitted between the wheel 2 and the snow chain 5. The confinement of the disc-shaped element between the wheel 2 and the snow chain 5 that is obtained in this manner prevents the element from moving while driving.

The full abutment of the recessed central portion 12 of the disc-shaped element 10 against a wheel 2 having a corresponding shape also prevents moving/flapping of the disc-shaped element 10 while driving, which would occur if the disc-shaped element would be embodied as a flat disc.

Also in the case of a flat wheel 2, however, an improved confinement can be obtained with this specific embodiment of the disc-shaped element 10, because the recessed central portion 12 is deformed by the wheel 2 upon tensioning of the snow chain. This results in an improved confinement of the disc-shaped element 10 and a reduced risk of displacement thereof.

Antiskid additives may be added to the elastic plastic element 5.

As the rear side of the disc-shaped element 10 that is shown in Fig. 2b discloses, the transition 14 between the recessed central portion 12 and the elevated outer portion 13 of the disc-shaped element 10 exhibits an angle. This prevents snow and/or ice accumulating and caking in the central portion 12.

In order to further improve the confinement of the elastic disc-shaped element between the wheel 2 and the chain assembly 5-5a-5b, and thus prevent the disc-shaped element 10 from undesirably being displaced or becoming detached, the disc-shaped element 10 is provided with friction increasing means.

As Fig. 2a shows, said friction increasing means 15 are made up of at least one upright edge, which upright edge extends in concentrical direction in the form of a ring 15 extending concentrically with the outer edge 11, as is shown in the embodiment of Fig. 2a. Although one concentric ring 15 suffices, the disc-shaped element 10 is preferably provided with several concentric rings 15, which extend near the circumferential edge 11 of the elevated outer portion 13.

The upright edges 15 (concentric rings 15 in this embodiment) provide pressure points upon tensioning of the disc-shaped element 10 by the snow chain 5, at which pressure points the chain segments of the snow chain make contact with the friction increasing means 15. As a result, movement of the disc-shaped element 10 between the wheel 2 and the snow chain 5 is practically excluded. The use of friction increasing means in the form of one or more upright edges 15 guarantees a more or less complete fixation of the disc-shaped element 10 between the wheel 2 and the snow chain 5.

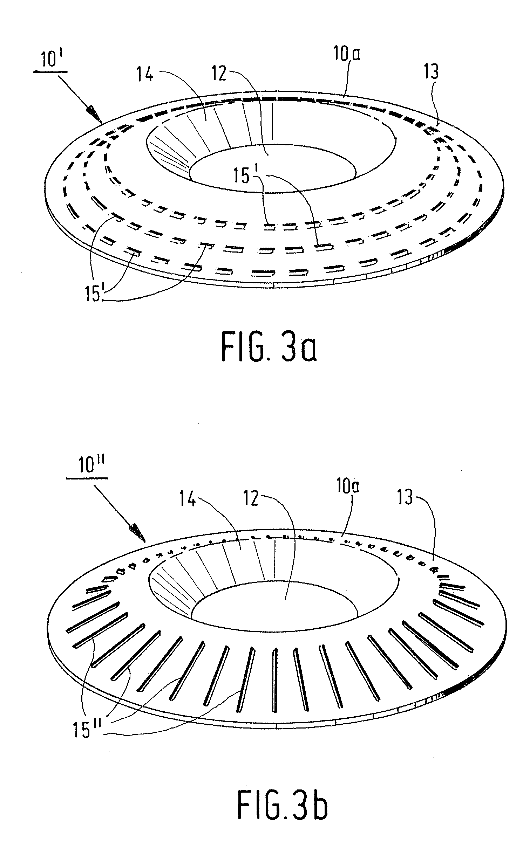

Figs. 3a and 3b show two further embodiments of the friction increasing means according to the invention. In Fig. 3a, the friction increasing means consist of upright edges 15', analogously to the embodiment of Fig. 2a, which upright edges are arranged in the form of concentric rings on the elastic disc-shaped element 10'. In the embodiment that is shown in Fig. 3a, said upright concentric ring edges 15' are interrupted.

In the embodiment as shown in Fig. 3b, the elastic disc-shaped element 10" is provided with friction increasing means 15'', which are embodied as upright edges extending in radial direction.

In the embodiments of the friction increasing means 15'-15" that are shown in Fi gs. 3a and 3b, the chain segments of the snow chain 5 can be tensioned over the upright edges, thus providing pressure points that guarantee an adequate confinement and fixation of the elastic disc-shaped element 10 between the wheel 2 and the snow chain 5. On the other hand, the chain segments may be confined between two edge portions, so that the chain segments "hook" behind the upright edges of the friction increasing means 15''.

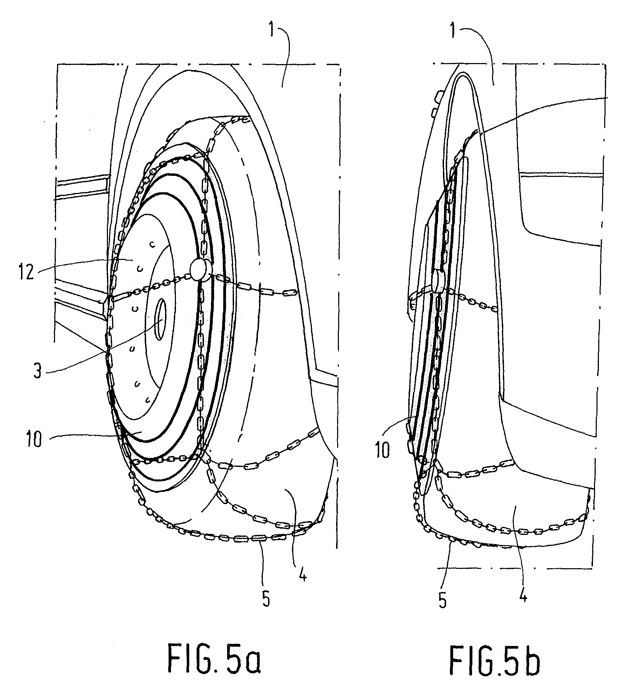

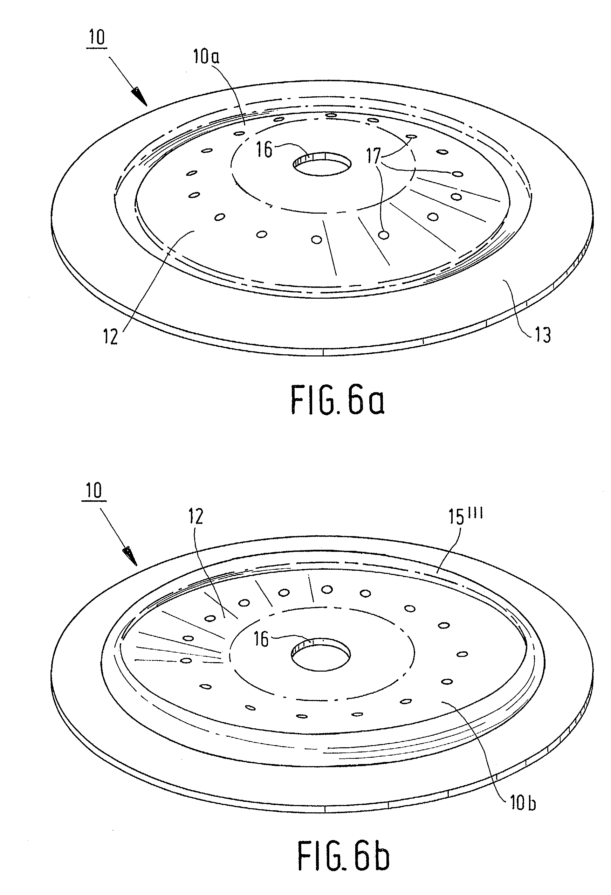

Figs. 4 and 5a-5b show a snow chain 5 fitted round a tyre 4 and a wheel 2 of the vehicle, with an embodiment of the elastic disc-shaped element 10 according to the invention fitted therebetween. Fig. 4 shows a snow chain 5 and the elastic disc-shaped element 10, seen from one side of the vehicle 1, whilst Figs. of 5a-5b show the vehicle 1 provided with the snow chain 5 and the elastic disc-shaped element 10 more from the front side.

The three views (Figs. 4, 5a and 5b) clearly show the recessed portion 12 as well as the friction increasing means 15, which are embodied as concentric upright edges 15, analogously to Fig. 2a. Fig. 4 clearly shows that the diameter of the elastic disc-shaped element 10 is larger than the diameter of the wheel 2 but smaller than the diameter of the tyre 4. All chain segments of the snow chain 5 are thus fitted over the elastic disc-shaped element 10, so that they will not come into contact with the wheel 2 while the vehicle 1 is driving.

The elastic disc-shaped element 10 is provided with an opening 16, which is located precisely in the centre in this embodiment. The opening 16 makes it easier for the user to handle the elastic disc-shaped element 10. More in particular, the opening 16 functions to make it possible to take hold of the elastic disc-shaped element and correctly position (read: centre) the elastic disc-shaped element 10 with respect to the wheel 2 and the tyre 4 upon fitting of the snow chain 5.

Furthermore, the elastic disc-shaped element 10 is provided with several openings 17 in Fig. 4, which openings are intended for draining water that may undesirably collect between the elastic disc-shaped element 10 and the wheel 2 / tyre 4. In addition to draining water that has collected between two wheel 2 and the elastic disc-shaped element 10, the openings 17 also function to allow air to flow through while driving, thus preventing movement/flapping of the elastic disc-shaped element 10 and thus displacement thereof. In addition to that, the handling/road-holding of the vehicle 1 is not interfered with in this manner.

As Fig. 5a and more in particular Fig. 5b clearly shows, the external dimensions of the vehicle 1 only increase to a minor extent when the elastic disc-shaped element 10 is fitted between the wheel 2 and the snow chain 5. Thus, the aerodynamics and the road-holding of the vehicle 1 are not adversely affected.

More in particular, the elastic disc-shaped element 10 is made of a plastic in all the illustrated embodiments, which in the first place results in a product which is light in weight, so that the handling and the road-holding of the vehicle 1 will not be adversely affected while driving. More in particular, a thermoplastic is to be used as said plastic, which makes it possible to manufacture of the elastic disc-shaped element in any shape thereof by means of a heating and pressing process.

In addition to that, this material is very easy to work, for example by means of a cutting operation, so that it is possible to obtain the elastic disc-shaped element in the desired diameter and (optionally) provided with the desired openings 16-17 in one operation. The recessed portion 12 with the obliquely extending transition 14 on the one hand and the friction increasing means 15 in the form of (concentric or radial, interrupted or uninterrupted) upright edges on the other hand can then be formed in the elastic disc-shaped element 10 by subsequently heating the thermoplastic and shaping it in a mould makes.

Upon manufacture of the elastic disc-shaped element for use with the snow chain, the heating and the pressing step can be carried out in succession; a quicker a manufacturing method can be obtained, however, by additionally deforming the elastic disc-shaped element 10 to the desired shape, for example as shown in Figs. 2a and 2b, during the heating step in the pressing mould.

The friction increasing means 15 may also be embodied as upright, circular areas, which may be formed on the elastic disc-shaped element 10 in the form of a line (concentric ring) or in any other form. Although the elastic disc-shaped element 10 is provided with only one openings 16 in figures 4, 5a and 5b, the element may also comprise two, three or more openings positioned round the centre of the elastic disc-shaped element 10, into which openings the user can put his fingers. This makes it easier to handle the elastic disc-shaped element upon fitting thereof.

It should be noted that the elastic disc-shaped element 10 is also very suitable as a protective cover against spurting grit, which is used as a traction-increasing material in many winter sports countries (instead of salt) to prevent against roads becoming slippery due to snow or ice.

It should furthermore be noted that the elastic disc-shaped element 10 is very easy to clean and, in addition, is moisture and frost-resistant.

## Claims

1. A snow chain for a tyre mounted on a wheel of a vehicle, which snow chain at least comprises an assembly of chains to be fitted and tensioned round the tyre and the wheel, wherein a disc-shaped element having a diameter at least equal to the diameter of the wheel can be fitted between the wheel and the assembly of chains, **characterized in that** said disc-shaped element is made of an elastic plastic.

2. A snow chain according to claim 1, **characterized in that** said disc-shaped element is made of a rubber.

3. A snow chain according to claim 1 or 2, **characterized in that** said disc-shaped element is made of a thermoplastic.

4. A snow chain according to any one of the claims 1-3, **characterized in that** said disc-shaped element is flat.

5. A snow chain according to any one of the claims 1-4, **characterized in that** said disc-shaped element is arched.

6. A snow chain according to any one or more of the preceding claims, **characterized in that** said disc-shaped element has a recessed central portion.

7. A snow chain according to claim 6, **characterized in that** the transition between the recessed central portion and the elevated outer portion includes an angle with the recessed central portion.

8. A snow chain according to any one or more of the preceding claims, **characterized in that** said disc-shaped element is provided with at least one opening near its centre.

9. A disc-shaped element for use in combination with a snow chain as defined in any one or more of the preceding claims.

10. A method for fitting a snow chain embodied as an assembly of chains on a tyre mounted on the wheel of a motor vehicle, comprising the steps of
i) fitting the assembly of chains over the tyre, and
ii) tensioning the assembly of chains, **further characterized by** the step of
iii) placing a disc-shaped element according to any one or more of the preceding claims between the wheel and the assembly of chains.

11. A method according to claim 10, wherein step iii) is carried out prior to step ii).
